# NOUVEAU FASCICULE DE BREVET EUROPEEN

(11) **EP 0 742 656 B2**
(45) Date de publication et mention de la décision concernant l'opposition: **31.10.2012**
(45) Mention de la délivrance du brevet: 30.09.2009
(21) Numéro de dépôt: 96400908.8
(22) Date de dépôt: 26.04.1996
(51) Int. Cl.: H04L 9/32, G07C 5/08

(54) **Procédé et systeme pour la sécurisation de la transmission de données entre un capteur et un enregistreur**
Verfahren und Vorrichtung zur Sicherung der Datenübertragung zwischen einem Sensor und einem Aufzeichnungsgerät
Method and system for the security of data transmission between a sensor and a recording unit

(30) Priorité: 12.05.1995 FR 9505661
(43) Date de publication de la demande: 13.11.1996
(73) Titulaire: ACTIA Automotive, 31400 Toulouse (FR)
(72) Inventeur: Cosson Eric, 92402 Courbevoie Cedex (FR); Craignou, Gilles, 92402 Courbevoie Cedex (FR); Morel, Christian, 92402 Courbevoie Cedex (FR)
(74) Mandataire: Colas, Jean-Pierre

(56) Documents cités:
- DE-A- 4 202 583
- US-A- 4 200 770
- US-A- 5 321 753
- EASCON'79 - PROCEEDINGS OF IEEE ELECTRONICS AND AEROSPACE SYSTEMS CONVENTION, ARLINGTON (US), 25 - 27 Septembre 1978 NEW YORK (US), pages 661-662, XP 000575512 G.J.SIMMONS 'MESSAGE AUTHENTICATION WITHOUT SECRECY: A SECURE COMMUNICATIONS PROBLEM UNIQUELY SOLVABLE BY ASYMMETRIC ENCRYPTION TECHNIQUES'
- PROCEEDINGS OF 1990 INTERNATIONAL CARNAHAN CONFERENCE ON SECURITY TECHNOLOGY: CRIME COUNTERMEASURES LEXINGTON (US), 10 - 12 Octobre 1990 NEW YORK (US), pages 29-32, XP 000222750 L.COOKE 'SENSOR TECHNOLOGY AND SIGNAL ANALYSIS: HIGH SECURITY ENCRYPTION SUPERVISION'
- 'Proposal for a COUNCIL REGULATION on rec.equipm.in road transp' OFFICIAL JOURNAL no. 940187, 22 Juillet 1994, BRUSSELS, pages 8 - 8

## Description

La présente invention a pour objet un procédé permettant de sécuriser la transmission de données entre un capteur délivrant des impulsions et un enregistreur traitant celles-ci, ainsi qu'un système pour la mise en oeuvre du procédé.

Le domaine d'application notamment visé par l'invention est celui des chronotachygraphes utilisés dans les véhicules poids lourds pour vérifier leur vitesse de déplacement et le respect des temps réglementaires des chauffeurs routiers.

Dans un autre domaine, le document PROCEEDINGS OF 1990 INTERNATIONAL CARNAHAN CONFERENCE ON SECURITY TECHNOLOGIE : CRIME COUNTERMESURES LEXINGTON (US), 10 - 12 Octobre 1990 NEW YORK (US), pages 29-32 » décrit la sécurisation d'une liaison entre un capteur délivrant des données et un centre de surveillance.

A l'heure actuelle, les chronotachygraphes sont composés essentiellement d'un capteur tachymétrique qui transmet, sur une liaison électrique différentielle, une ou plusieurs impulsions à un enregistreur, par exemple un disque, chaque fois que les roues du véhicule poids lourd ont effectué un tour. En extrayant la période de répétition des impulsions enregistrées, on en déduit la vitesse du véhicule au cours du déplacement

Le capteur et l'enregistreur sont généralement séparés par une distance comprise entre 2 et 10 mètres.

Pour le moment, aucune sécurité n'est prévue sur les chronotachygraphes existants, ce qui rend possible toutes sortes de fraudes: On peut notamment brancher en parallèle sur la liaison entre le capteur et l'enregistreur existants un faux capteur qui viendrait modifier, en l'occurrence diminuer, le nombre d'impulsions transmises.

Le but de la présente invention est de sécuriser la transmission des données entre le capteur et l'enregistreur, et ce, à plusieurs niveaux :

Tout d'abord, au niveau de la liaison, pour éviter, d'une part, que de fausses informations soient transmises à l'enregistreur, et d'autre part, qu'un capteur falsifié soit branché en lieu et place de celui qui a été certifié par l'organisme de contrôle.

Plus précisément, l'invention a pour but de détecter et d'enregistrer toute tentative de falsification de la liaison entre le capteur et l'enregistreur.

Ensuite, au niveau des informations transmises, pour éviter que les données du capteur soient modifiées.

La présente invention peut être généralisée à tout type de transmission entre un capteur délivrant des impulsions et un enregistreur chargé de les traiter.

Pour atteindre le but précédent, la présente invention a pour objet un procédé selon la revendication 1 pour la sécurisation de la transmission de données entre un capteur tachymétrique délivrant des impulsions et un enregistreur traitant celles-ci.

Avantageusement, les données chiffrées échangées entre le module enregistreur et le module capteur sont modulées avant transmission par une modulation de largeur d'impulsion à deux états d'une fréquence porteuse fixe, et démodulées à la réception.

Par ailleurs, la présente invention a également pour objet un système pour la mise en oeuvre du procédé de sécurisation défini ci-dessus.

D'autres caractéristiques et avantages de la présente invention apparaîtront au vu de la description suivante, faite en référence aux figures annexées dans lesquelles :
- la figure 1 illustre le principe général du chiffrement et du déchiffrement selon un code généré par un polynôme réversible ;
- les figures 2a et 2b représentent, sous forme de synoptique, le fonctionnement d'un système possible mettant en oeuvre le procédé selon l'invention du côté du module enregistreur (figure 2a) et du module capteur (figure 2b).

Le principe du procédé de sécurisation selon l'invention repose sur un échange permanent de données chiffrées entre un module enregistreur comprenant l'enregistreur et un module capteur comprenant le capteur.

Selon l'invention, l'échange s'effectue à l'initiative du module enregistreur qui envoie des messages de commande chiffrés au module capteur. Ce dernier acquitte les commandes, puis génère à son tour des messages de retour chiffrés, soit pour indiquer l'acquittement de la commande, soit pour transmettre des impulsions du capteur en vue de leur traitement par l'enregistreur. Le module enregistreur déchiffre alors et vérifie les messages de retour pour, d'une part, contrôler la cohérence de ces messages, et d'autre part, restituer les impulsions à l'enregistreur.

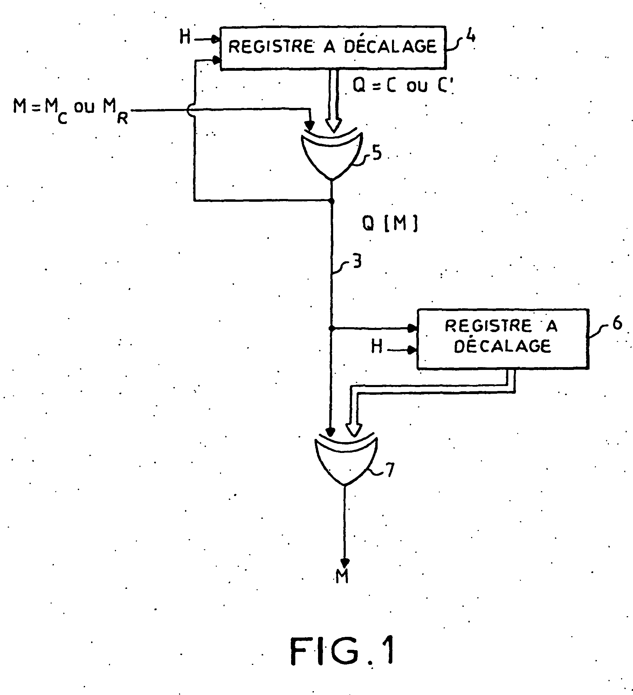

On utilise de préférence pour le chiffrement et le déchiffrement, des codes générés par des polynômes réversibles. On rappelle ci-après en référence à la figure 1, le principe général du chiffrement/déchiffrement d'un message M quelconque :

Un registre à décalage 4 de taille N fonctionnant à une cadence H permet de générer un code pseudo-aléatoire Q dont la séquence est de taille 2^{N}-1. Une porte OU 5 reçoit d'une part le code de chiffrement Q, et d'autre part, le message M que l'on souhaite transmettre, et délivre un message Q[M] chiffré transmis via la liaison 3. La sortie de la porte 5 est rebouclée sur l'entrée du registre 4. A la réception, un autre registre à décalage 6 fonctionnant également à la cadence H, reçoit en entrée le message chiffré Q[M]. La sortie du registre est délivrée à une autre porte logique 7 recevant par ailleurs le message chiffré. On récupère par conséquent en sortie de la porte 7 le message M déchiffré.

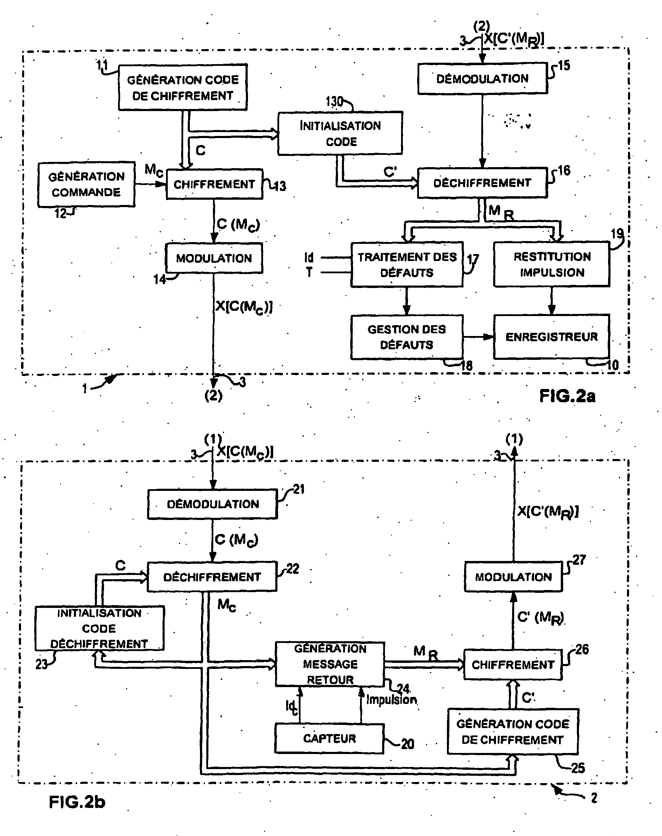

On détaille ci-après le principe du procédé selon l'invention en référence aux figures 2a et 2b qui représentent un synoptique de fonctionnement pour un système possible mettant en oeuvre le procédé selon l'invention. Plus précisément, la figure 2a illustre le système au niveau du module enregistreur, et la figure 2b illustre le système au niveau du module capteur :

Comme on le voit sur la figure 2a, le module enregistreur 1 comporte d'une part des premiers moyens 11 à 14 lui permettant de générer des messages de commande chiffrés, et d'autre part, des seconds moyens 10 et 15 à 19 pour la vérification des messages de retour.

Les premiers moyens comportent un module 11 de génération d'un premier code de chiffrement C. Ce code de chiffrement est avantageusement généré par un polynôme réversible.

Un module 12 génère par ailleurs les messages de commande M_{C} proprement dit. Ces messages sont alors chiffrés selon le premier code de chiffrement C par un module de chiffrement 13, de manière à délivrer des messages de commande chiffrés C(M_{C}).

Ces messages sont avantageusement modulés par une modulation de largeur d'impulsion à deux états d'une porteuse à fréquence fixe, égale par exemple à 2 MHz, ce qui permet de ne pas avoir à transmettre l'horloge servant à synchroniser les circuits du module capteur pour la démodulation et le déchiffrement des messages.

Les messages de commande chiffrés et modulés X[C(Mc)] sont ensuite transmis à destination du module capteur 2 par une liaison série de type différentielle 3, par exemple du type RS 422.

En référence à la figure 2b, le module capteur 2 effectue alors une démodulation 21 des messages reçus, puis un déchiffrement 22 des messages démodulés C(M_{C}) obtenus, de manière à retomber sur les messages de commande M_{C} initiaux.

En fonction des messages de commande, reçus, le module capteur va effectuer certaine tâches :

Dans un mode de réalisation préférentielle de l'invention, les messages de commande sont de trois types :
- II peut s'agir d'un message de demande d'identification du capteur 20, auquel cas le module capteur va générer, par l'intermédiaire d'un module 24, un message de retour M_{R} comportant une information Id_{C} identifiant le capteur 20, par exemple son numéro de série. Ce message peut être envoyé au début de l'échange, ou de façon périodique
- Il peut s'agir également d'une demande d'initialisation des codes de chiffrement, lé code d'initialisation étant classiquement généré par un générateur de séquence pseudo-aléatoire de taille N' qui allonge ainsi la taille de la séquence résultante totale. Cette opération est ici réalisée par le module 11 qui délivre aux modules 23, 25 et 130 les codes pour les échanges futurs. Les modules de chiffrement 13 et 26 et de déchiffrement 22 et 16 sont alors aptes à dialoguer avec les nouveaux codes
- Il peut s'agir d'un message de test de liaison. Dans ce cas, le module 24 génère simplement un message de retour répondant à ce test.

Par ailleurs, outre les messages de retour correspondant à des réponses aux messages de commande, le module 24 génère également des messages de retour comprenant l'impulsion délivrée par le capteur 20.

Dans tous les cas, les messages de retour M_{R} sont également chiffrés par un module de chiffrement 26, selon un second code de chiffrement C' généré par un module 25.

Comme le premier code C, le second C' est avantageusement généré par un polynôme réversible selon les techniques classiques

Puis les messages de réponse chiffrées sont modulés par le module 27, et les messages obtenus X[C'(M_{R})] sont transmis via la liaison série 3.

En référence à nouveau à la figure 2a, les messages de retour X[C'(M_{R})] reçus par le module enregistreur 1 sont alors démodulés par un module de démodulation 15, puis déchiffrés par le module de déchiffrement 16 en fonction du second code de chiffrement C'.

On procède alors à une étape de vérification des messages M_{R} obtenus. Pour ce faire, le module enregistreur 1 dispose d'un module 17 de traitement des défauts de transmission, qui permet de contrôler la cohérence des messages reçus suite à une commande. Dans le cas où la commande était une demande d'identification de capteur, ce module 17 contrôle si le message de retour comprend une information correspondant à une identification prédéterminée Id. Ceci permet de détecter les branchements de capteurs falsifiés. Dans le cas où la commande était une demande de réinitialisation des codes de chiffrement, le module 17 vérifie que le message de retour M_{R} comprend une information relative à l'acquittement de la réinitialisation. Dans le cas où la commande est un test de liaison, le module 17 vérifie qu'il reçoit une réponse au bout d'une durée T prédéfinie.

Un module 18 permet alors de gérer les défauts qui ont été détectés. Pour l'application au chonotachygraphe de véhicules poids lourds, on peut prévoir que la détection d'un défaut, quelle que soit sa nature, se traduira par un battement de l'aiguille du compteur de vitesse entre par exemple 8 et 20 km/h, et/ou par l'allumage du témoin d'enregistrement et de fonctionnement des stylets, et/ou par un tracé sur le disque enregistreur.

Dans un autre mode de réalisation, le traitement des retours déclenche des défauts qui seront identifiés précisément (capteur, liaison, données...).

Par ailleurs, un module 19 permet de restituer, à partir du message de retour M_{R}, l'impulsion émise par le capteur 20 en vue de son traitement par l'enregistreur 10.

Certaines variantes de réalisation peuvent être réalisées sans sortir du cadre de la présente invention. On peut notamment prévoir d'autres messages de commande que ceux exposés précédemment, avec une vérification adéquate de la réponse du module capteur.

## Revendications

1. Procédé pour la sécurisation de la transmission de données entre un capteur (20) délivrant des impulsions et un enregistreur (10) traitant celles-ci, comportant les étapes suivantes :
• établir un échange de données chiffrées entre un module enregistreur (1) comprenant ledit enregistreur et un module capteur (2) comprenant ledit capteur, via une liaison série (3), lesdites données chiffrées comprenant :
○ des messages de commande numériques (M_{C}) générés et chiffrés par le module enregistreur (1), et
○ des messages de retour numériques (M_{R}) comprenant des messages générés et chiffrés par le module capteur (2) en réponse à des messages de commande reçus et déchiffrés, et
• effectuer un déchiffrement et une vérification des messages de retour reçus par le module enregistreur (1) pour valider en permanence l'intégrité de la liaison et des données,
**caractérisé en ce que**
• lesdits messages de commande (M_{C}) sont chiffrés dans ledit module enregistreur (1) et déchiffrés dans ledit module capteur (2) au moyen d'un premier code de chiffrement C,
• lesdits messages de retour (M_{R}) sont chiffrés dans ledit module capteur (2) et déchiffrés dans ledit module enregistreur (1) au moyen d'un second code de chiffrement C',
• ledit capteur (20) est un capteur tachymétrique qui délivre les impulsions et lesdits messages de retour (M_{R}) comprennent en outre des messages générés par ledit module capteur (2) pour la transmission desdites impulsions en vue de leur restitution pour leur traitement par le module enregistreur,
• et **en ce que** les messages de commande comprennent des messages de demande de réinitialisation des codes de chiffrement C et C', **en ce que** les messages de retour correspondants comprennent une information relative à l'acquittement de la réinitialisation, et **en ce que** l'étape de vérification consiste à contrôler que la réinitialisation demandée a été acquittée.

2. Procédé selon la revendication 1, **caractérisé en ce que** les messages de commande (M_{C}) comprennent au moins un message de demande d'identification du capteur, **en ce que** le message de retour (M_{R}) correspondant comporte une information (Id_{C}) identifiant le capteur relatif au module capteur (2) générant le message de retour, et **en ce que** l'étape de vérification consiste à contrôler que ladite information correspond à une identification (Id) prédéfinie.

3. Procédé selon la revendication 2, **caractérisé en ce que** le message de demande d'identification de capteur est envoyé périodiquement pendant l'échange de données chiffrées.

4. Procédé selon la revendication 1, **caractérisé en ce que** les message de demande de modification des codes de chiffrement C et C' sont émis de façon pseudo-aléatoire.

5. Procédé selon l'une quelconque des revendications précédentes, **caractérisé en ce que** les messages de commande comportent des messages de test de la liaison (3) entre le module enregistreur (1) et le module capteur (2), et **en ce que** l'étape de vérification consiste à contrôler que les messages de retour correspondants ont été transmis au bout d'une durée T prédéfinie.

6. Procédé selon l'une quelconque des revendications précédentes, **caractérisé en ce que** le premier et le second codes de chiffrement C et C' sont chacun générés par un polynôme réversible.

7. Procédé selon l'une quelconque des revendications précédentes, **caractérisé en ce que** les données chiffrées échangées entre le module enregistreur (1) et le module capteur (2) sont modulées (14 ; 27) avant transmission par une modulation de largeur d'impulsion à deux états d'une fréquence porteuse fixe, et démodulées (15 ; 21) à la réception.

8. Système pour la mise en oeuvre d'un procédé selon l'une quelconque des revendications 1 à 7, comprenant un module capteur (2) délivrant des impulsions, un module enregistreur (1) traitant celles-ci et une liaison série (3) entre le module enregistreur et le module capteur, **caractérisé en ce que :**
• le module enregistreur (1) comporte des moyens (12) de génération et (13) de chiffrement de messages de commande numériques (M_{C}), des moyens (16) de déchiffrement de messages de retour reçus dudit module capteur (2) et des moyens (10, 17 à 19) de vérification desdits messages de retour,
• le module capteur (2) comporte des moyens (22) de déchiffrement des messages de commandes reçus dudit module enregistreur (1) et des moyens (24) de génération et (26) de chiffrement desdits messages de retour numériqués (M_{R}),
**caractérisé en ce que**
• le module enregistreur (1) comporte des moyens (11) de génération d'un premier code de chiffrement C pour le chiffrage desdits messages de commande (M_{C}) et de génération d'un second code de chiffrement C' pour le chiffrage desdits messages de retour, pour délivrer :
- à des moyens (130) d'initialisation dudit module enregistreur (1), ledit code C' pour le déchiffrage desdits messages de retour,
- à des moyens (23) d'initialisation dudit module capteur, ledit premier code de chiffrement C pour le déchiffrage desdits messages de commande et à des moyens (25) d'initialisation dudit module capteur ledit second code de chiffrement C' pour le chiffrage desdits messages de retour numériques (M_{R})
• ledit capteur (20) est un capteur tachymétrique qui délivre les impulsions et comprend des moyens (24) pour générer des messages de retour (M_{R}) comprenant lesdites impulsions, et
• les moyens de vérification comprennent un module (19) de restitution des impulsions transmises par le capteur (20) en vue de leur traitement par l'enregistreur (10).

9. Système selon la revendication 8, **caractérisé en ce que** les moyens de vérification comprennent un module (17) de traitement des défauts de transmission.

## Claims

1. Process for safeguarding the transmission of data between a sensor (20) delivering pulses and a recorder (10) that processes the latter, comprising the following steps:
. establishing an exchange of encrypted data between a recording module (1) comprising said recorder and a sensing module (2) comprising said sensor, via a series connection (3), said encrypted data comprising:
○ digital command messages (M_{c}) generated and encrypted by the recording module (1), and
○ digital return messages (M_{R)}) comprising messages generated and encrypted by the sensor module (2) in response to command messages received and decrypted, and
. carrying out decryption and verification of the return messages received by the recording module (1) in order to constantly check the integrity of the connection and the data,
**characterised in that**
. said command messages (M_{c}) are encrypted in said recording module (1) and decrypted in said sensing module (2) by means of a first encryption code C,
. said return messages (M_{R}) are encrypted in said sensing module (2) and decrypted in said recording module (1) by means of a second encryption code C',
. said sensor (20) is a tachometric sensor which delivers the pulses and said return messages (M_{R}) further comprise messages generated by said sensing module (2) for the transmission of said pulses with a view to restoring them for processing by the recording module,
. and **in that** the command messages include messages requesting the resetting of the encryption codes C and C', **in that** the corresponding return messages include information relating to the completion of the resetting, and **in that** the verification step consists in checking that the resetting requested has been completed.

2. Process according to claim 1, **characterised in that** the command messages (M_{c}) comprise at least one message requesting identification of the sensor, **in that** the corresponding return message (M_{R}) comprises information (Idₑ) identifying the sensor relative to the sensing module (2) generating the return message, and **in that** the verification step consists in checking that the information corresponds to a predefined identification (Id).

3. Process according to claim 2, **characterised in that** the message requesting identification of the sensor is sent periodically through the exchange of encrypted data.

4. Process according to claim 1, **characterised in that** the messages requesting modification of the encryption codes C and C' are sent in a pseudo-random manner.

5. Process according to any one of the preceding claims, **characterised in that** the command messages comprise messages for testing the connection (3) between the recording module (1) and the sensing module (2), and **in that** the verification step consists in checking that the corresponding return messages have been sent after a predefined length of time T.

6. The process according to any one of the preceding claims, **characterised in that** the first and second encryption codes C and C' are each generated by a reversible polynomial.

7. The process according to any one of the preceding claims, **characterised in that** the encrypted data exchanged between the recording module (1) and the sensing module (2) are modulated (14; 27) before transmission by a two-state pulse width modulation of a fixed carrier frequency, and demodulated (15; 21) on reception.

8. System for carrying out a process according to any one of claims 1 to 7, comprising a sensor module (2) delivering pulses, a recording module (1) which processes them and a series connection (3) between the recording module and the sensing module, **characterised in that**:
. the recording module (1) comprises means for generating (12) and for encrypting (13) digital command messages (M_{c}), means (16) for decrypting return messages received from said sensing module (2) and means (10, 17 to 19) for verifying said return messages,
. the sensing module (2) comprises means (22) for decrypting the command messages received from said recording module (1) and means for generating (24) and for encrypting (2.6) said digital return messages (Nₜₛ),
characterised tin that
. the recording module (1) comprises means (11) for generating a first encryption code C for encrypting said command messages (M_{c}) and for generating a second encryption code C' for encrypting said return messages, for supplying:
- means (130) for resetting said recording module (1) with said code C' for decrypting said return messages,
- means (23) for resetting said sensing module with said first encryption code C for decryption of said command messages, and for supplying means (25) for resetting said sensing module with said second encryption code C' for encrypting said digital return messages (M_{R}),
. said sensor (20) is a tachometric sensor which delivers the pulses and comprises means (24) for generating return messages (M_{R}) comprising said pulses, and
. the verifying means comprising a module (19) for restoring the pulses transmitted by the sensor (20) in order that they can be processed by the recorder (10).

9. System according to claim 8, **characterised in that** the verifying means comprise a module (17) for processing transmission faults.

## Patentansprüche

1. Verfahren zum Sichern der Übertragung von Daten zwischen einem Sensor (20), der Impulse ausgibt, und einer Speichervorrichtung (10), die diese verarbeitet, die folgenden Schritte aufweisend:
• Herstellen eines Austauschs von verschlüsselten Daten zwischen einem Speichermodul (1), das die Speichervorrichtung aufweist, und einem Sensormodul (2), das den Sensor aufweist, über eine serielle Verbindung (3), wobei die verschlüsselten Daten aufweisen:
○ digitale Refehlnnachrichten (M_{C}), die von dem Speichermodul (1) erzeugt und verschlüsselt werden,
○ digitale Rückgabenachrichten (M_{R}), die Nachrichten aufweisen, die von dem Sensormodul (2) in Antwort auf empfangene und entschlüsselte Berehlsnachrichten erzeugt und verschlüsselt werden, und
• Durchführen einer Entschlüsselung und einer Verifizierung der von dem Speichermodul (1) empfangenen Rückgabenachrichten, um die Integrität der Verbindung und der Daten laufend zu validieren,
**dadurch gekennzeichnet, dass**
• die Befehlsnachrichten (M_{C}) mittels eines ersten Verschlüsselungscodes C in dem Speichermodul (1) verschlüsselt und in dem Sensormodul (2) entschlüsselt werden,
• die Rückgabenachrichten (M_{R}) mittels eines zweiten Verschlüsselungscodes C' in dem Sensormodul (2) verschlüsselt und in dem Speichermodul (1) entschlüsselt werden,
• der Sensor (20) ein tachymetrischer Sensor ist, der die Impulse ausgibt, und die Rückgabenachrichten (M_{R}) darüber hinaus Nachrichten aufweisen, die von dem Sensormodul (2) erzeugt werden, zum Übertragen der Impulse im Hinblick auf ihre Rückgabe für ihre Verarbeitung durch das Speichermodul,
• und dass die Befehlsnachrichten Nachrichten zum Anfordern der Neuinitialisierung der Verschlüsselungscodes C und C' aufweisen, dass die korrespondierenden Rückgabenachrichten eine Information in Bezug auf die Bestätigung der Neuinitialisierung aufweisen, und dass der Schritt des Verifizierens darin besteht, zu überprüfen, dass die angeforderte Neuinitialisierung bestätigt wurde.

2. Verfahren gemäß Anspruch 1, **dadurch gekennzeichnet, dass** die Befehlsnachrichten (M_{C}) mindestens eine Nachricht zum Anfordern der Identifizierung des Sensors aufweisen, dass die korrespondierende Rückgabenachricht (M_{R}) eine Information (Id_{C}) aufweist, die den Sensor bezüglich des Sensormoduls (2) identifiziert, das die Rückgabenachricht erzeugt, und dass der Schritt des Verifizierens darin besteht, zu überprüfen, dass die Information einer vordefinierten Identifizierung (Id) entspricht.

3. Verfahren gemäß Anspruch 2, **dadurch gekennzeichnet, dass** die Sensor-Identifizierungs-Anforderungs-Nachricht während des Austauschs von verschlüsselten Nachrichten periodisch ausgesendet wird.

4. Verfahren gemäß Anspruch 1, **dadurch gekennzeichnet, dass** die Nachrichten zum Anfordern des Modifizierens der Verschlüsselungscodes C und C' auf pseudozufällige weise ausgegeben werden.

5. Verfahren gemäß irgendeinem der vorhergehenden Ansprüche, **dadurch gekennzeichnet, dass** die Befehlsnachrichten Nachrichten zum Testen der Verbindung (3) zwischen dem Speichermodul (1) und dem Sensormodul (2) aufweisen, und dass der Schritt des Verifizieren darin besteht, zu überprüfen, dass die korrespondierenden Rückgabenachrichten nach einer vordefinierten Dauer T übermittelt wurden.

6. Verfahren gemäß irgendeinem der vorhergehenden Ansprüche, **dadurch gekennzeichnet, dass** der erste und der zweite verschlüsselungscode C und C' jeweils durch ein reversibles Polynom erzeugt werden.

7. Verfahren gemäß irgendeinem der vorhergehenden Ansprüche, **dadurch gekennzeichnet, dass** die verschlüsselten Daten, die zwischen dem Speichermodul (1) und dem Sensormodul (2) ausgetauscht werden, vor dem Übermitteln durch eine Pulsweitenmodulation mit zwei Zuständen einer festen Trägerfrequenz moduliert (14, 27) und beim Empfangen demoduliert (15, 21) werden.

8. System zum Durchführen eines Verfahrens gemäß irgendeinem der Ansprüche 7. bis 7, aufweisend ein Sensormodul (2), das Impulse ausgibt, ein Speichermodul (1), das diese verarbeitete und eine serielle Verbindung (3) zwischen dem Speichermodul und dem Sensormodul, **dadurch gekennzeichnet, dass**:
• das Speichermodul (1) aufweist: Mittel (12) zum Erzeugen und zum Verschlüsseln (13) von digitalen Befehlsnachrichten (M_{C}), Mittel (16) zum Entschlüsseln von Rückgabenachrichten, die von dem Sensormodul (2) empfangen werden, und Mittel (10, 17 bis 19) zum Verifizieren der Rückgabenachrichten,
• das Sensormodul (2) aufweist: Mittel (22) zum Entschlüsseln der Befehlsnachrichten, die von dem Speichermodul (1) empfangen werden, und Mittel (24) zum Erzeugen und Verschlüsseln (26) der digitalen Rückgabenachrichten (M_{R}), **dadurch gekennzeichnet, dass**
• das Speichermodul (1) Mittel (11) zum Erzeugen eines ersten Verschlüsselungscodes C zum Verschlüsseln der Befehlsnachrichten (M_{C}) und zum Erzeugen eines zweiten Verschlüsselungscodes C' zum Verschlüsseln der Rückgabenachrichten aufweiset, um auszugeben:
- den Code C' an Initialisierungsmittel (130) des Speichermoduls (1) zum Entschlüsseln der Rückgabenachrichten,
- den ersten Verschlüsselungscode C an Initialisierungsmittel (23) des Sensormoduls zum Entschlüsseln der Befehlsnachrichten, und den zweiten Verschlüsselungscode C' an Initialisierungsmittel (25) des Sensormoduls zum Verschlüsseln der digitalen Rückgabenachrichten (M_{R}),
• der Sensor (20) ein tachymetrischer Sensor ist, der die Impulse ausgibt und Mittel (24) zum Erzeugen von Rückgabenachrichten (M_{R}) aufweist, die die Impulse aufweisen, und
• die Verifizierungsmittel ein Modul (19) zum Zurückgeben der durch den Sensor (20) übermittelten Impulse im Hinblick auf ihre Verarbeitung durch die Speichervorrichtung (10) aufweisen.

9. System gemäß Anspruch 8, **dadurch gekennzeichnet, dass** die Varifizierungsmittel ein Modul (17) zum Verarbeiten von Übertragungsfehlern aufweisen.
